# FASCICULE DE BREVET EUROPEEN

(11) **EP 2 108 210 B1**
(45) Date de publication et mention de la délivrance du brevet: **02.05.2012**
(21) Numéro de dépôt: 08750466.8
(22) Date de dépôt: 04.01.2008
(51) Int. Cl.: H01M 10/50

(54) **DISPOSITIF ET PROCEDE DE CHAUFFAGE D'UNE BATTERIE DE VEHICULE HYBRIDE**
VORRICHTUNG UND VERFAHREN ZUR ERWÄRMUNG DER BATTERIE EINES HYBRIDFAHRZEUGS
DEVICE AND METHOD FOR HEATING THE BATTERY OF A HYBRID VEHICLE

(30) Priorité: 08.01.2007 FR 0752572
(43) Date de publication de la demande: 14.10.2009
(73) Titulaire: Peugeot Citroën Automobiles SA, 78140 Vélizy-Villacoublay (FR)
(72) Inventeur: MENET, Benoit, 92210 Saint-Cloud (FR); BEAUVILLAIN, Alexis, 91300 Massy (FR); DUMOULIN, Pierre, 92250 La Garenne Colombes (FR)
(74) Mandataire: Ménès, Catherine
(86) Numéro de dépôt international: PCT/FR2008/050012
(87) Numéro de publication internationale: WO 2008/096091

(56) Documents cités:
- FR-A- 2 716 843
- FR-A- 2 884 058
- FR-A1- 2 865 070
- JP-A- 2001 012 241
- US-B1- 6 464 027

## Description

La présente invention concerne un dispositif et un procédé de chauffage d'une batterie de véhicule hybride, c'est-à-dire d'un véhicule comportant un moteur thermique et un moteur électrique. Ladite batterie est tout spécialement la batterie qui alimente en courant le moteur électrique.

La batterie du moteur électrique d'un véhicule hybride est généralement constituée par un ensemble de modules, ou batteries élémentaires, connectés en série et placés dans une enceinte. La tension électrique aux bornes de chaque module est relativement faible (par exemple de l'ordre de 7 ou 8 Volts), mais la tension de la batterie (ensemble des modules connectés en série) est généralement de plusieurs centaines de Volts. C'est la raison pour laquelle cette batterie est généralement appelée « batterie haute tension» ou « batterie HT » pour la différencier de la batterie de tension plus faible (généralement de 12 Volts) associée au fonctionnement du moteur thermique.

Il est connu que la capacité et la puissance des batteries sont maximales pour une certaine plage de température et qu'en dehors de cette plage (par exemple par temps froids, lorsque la température extérieure est en dessous de 0°C), la capacité et la puissance des batteries HT sont si faibles qu'il est difficile, voir impossible, de faire fonctionner un véhicule hybride en mode électrique tant que la batterie HT ne s'est pas réchauffée,

Différents systèmes ont alors été proposés pour chauffer rapidement la batterie HT. Ainsi le brevet EP1065354 décrit une solution consistant à utiliser la chaleur perdue (« waste heat ») par le moteur thermique, cette chaleur étant prélevée dans le liquide de refroidissement du moteur thermique afin de chauffer la batterie. Le brevet FR 2040125 propose un procédé qui consiste à chauffer par induction les éléments de la batterie. Le brevet US5,624,003 décrit une méthode de chauffage de la batterie d'un véhicule électrique qui consiste à utiliser le circuit de chauffage de l'habitacle pour chauffer la batterie. A cette fin, les modules de la batterie sont disposés autour de l'élément chauffant qui est un chauffage par combustion (« combustion heater »). L'utilisation de résistances chauffantes placées autour des modules de la batterie a également été suggérée. Les diverses solutions proposées jusqu'ici présentent cependant l'inconvénient majeur de provoquer une surconsommation énergétique du véhicule.

On connaît enfin au travers du document FR2716843 un véhicule hybride thermique / électrique dans lequel les batteries sont disposées dans un conduit pouvant recevoir de l'air réchauffé provenant d'une chambre dans laquelle est évacuée l'air de refroidissement des moteurs électriques et qui peut être traversée par des tubes parcourus par les gaz d'échappement du moteur thermique.

La présente invention propose un dispositif et un procédé de chauffage d'une batterie qui ne s'accompagnent pas d'une surconsommation.

De façon plus précise, l'invention concerne un dispositif de chauffage d'une batterie d'un moteur électrique d'un véhicule hybride comportant un moteur électrique et un moteur thermique muni d'une ligne d'échappement pour l'évacuation des gaz d'échappement. Selon l'invention, le dispositif comporte des moyens branchés sur ladite ligne d'échappement, fournissant de la chaleur à ladite batterie.

Le dispositif comporte les caractéristiques suivantes :
- la batterie est placée dans une enceinte contenant un échangeur de chaleur, de préférence du type liquide/air, et les moyens fournissant de la chaleur à la batterie comportent un récupérateur de chaleur comprenant un échangeur air/liquide dont la sortie et l'entrée sont reliées, par une canalisation remplie d'un liquide caloporteur, respectivement à l'entrée et à la sortie de l'échangeur liquid/air de la batterie. Une pompe électrique peut être placée dans ladite canalisation entre la sortie de l'échangeur dudit récupérateur de chaleur et l'entrée de l'échangeur de la batterie, la pompe mettant en circulation ledit liquide caloporteur dans ladite canalisation.

Les moyens branchés sur la ligne d'échappement peuvent fournir de la chaleur aussi au système de chauffage de l'habitacle du véhicule.

Le moteur thermique peut comporter un circuit de refroidissement contenant un liquide caloporteur et le système de chauffage de l'habitacle comporte un échangeur air/liquide dont la sortie est reliée au circuit de refroidissement du moteur thermique et dont l'entrée est reliée à la sortie de l'échangeur air/liquide du récupérateur de chaleur.

L'entrée de l'échangeur air/liquide du système de chauffage de l'habitacle peut être reliée à la sortie de l'échangeur du récupérateur de chaleur par l'intermédiaire de ladite pompe électrique et d'une vanne trois voies, qui peut être positionnée entre deux positions extrêmes, une première position permettant de mettre en communication la sortie de l'échangeur dudit récupérateur uniquement avec l'entrée de l'échangeur de chaleur desdits moyens fournissant de la chaleur à la batterie, et une deuxième position extrême permettant de mettre en communication la sortie de l'échangeur dudit récupérateur uniquement avec l'entrée de l'échangeur air/liquide dudit système de chauffage de l'habitacle

L'entrée de l'échangeur du récupérateur de chaleur et l'entrée de l'échangeur du système de chauffage de l'habitacle peuvent être reliées entre elles par une canalisation munie d'un clapet anti-retour, ledit clapet s'ouvrant lorsque le débit de liquide caloporteur dans ladite pompe atteint un seuil prédéterminé.

La batterie pouvant être la batterie d'alimentation en courant électrique du moteur électrique.

D'autres avantages et caractéristiques de l'invention apparaîtront au cours de la description qui suit d'un mode de réalisation de l'invention, donné à titre d'exemple non limitatif, en référence aux dessins annexés et sur lesquels :
- la figure 1 montre l'architecture générale d'un premier mode de réalisation de l'invention,
- la figure 2 représente schématiquement un mode de fonctionnement du premier mode de réalisation montré sur la figure 1,
- la figure 3 représente schématiquement un autre mode de fonctionnement du premier mode de réalisation montré sur la figure 1.

Selon l'invention, l'énergie thermique dissipée dans la ligne d'échappement des gaz lors du fonctionnement du moteur thermique est récupérée afin de chauffer la batterie HT.

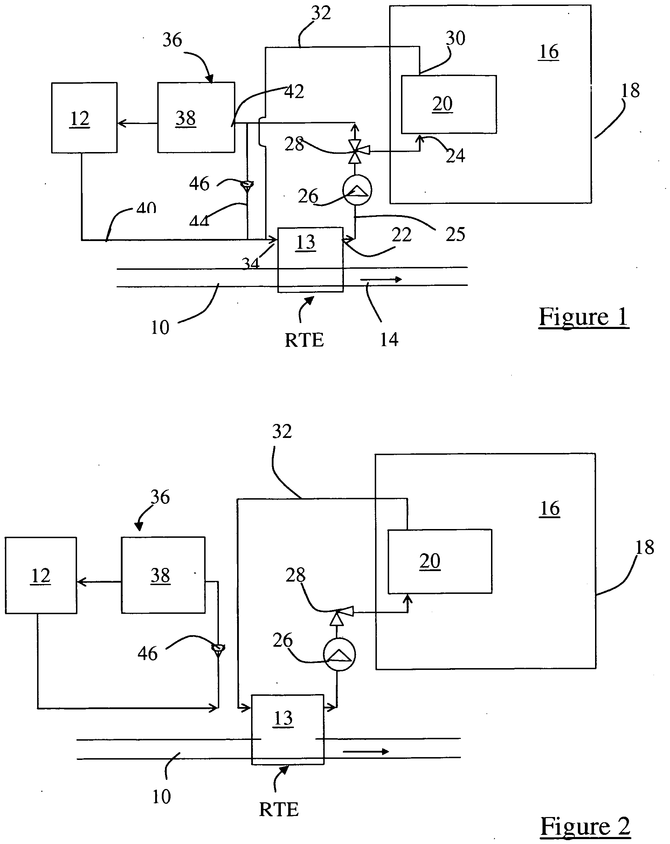

Sur la figure 1, un récupérateur thermique à l'échappement RTE est branché sur la ligne d'échappement 10 des gaz d'échappement fournis par le moteur thermique 12. Le récupérateur RTE comporte principalement un échangeur de chaleur 13, ici de préférence liquide/air. Les gaz d'échappement, circulant dans le sens indiqué par la flèche 14, élève la température du liquide caloporteur circulant dans l'échangeur 13. Le moteur électrique (non représenté) du véhicule hybride est alimenté en courant électrique par une batterie haute tension 16 placée dans une enceinte 18. Cette dernière accueille un échangeur de chaleur liquide/air 20. La sortie 22 de l'échangeur 13 du récupérateur RTE est reliée à l'entrée 24 de l'échangeur 20 par une canalisation 25 contenant du liquide caloporteur et dans laquelle sont connectées en série une pompe électrique 26 et une vanne trois voies 28. La pompe électrique est alimentée en courant électrique par la batterie basse tension du véhicule hybride. La sortie 30 de l'échangeur 20 de la batterie HT est reliée par une canalisation 32 à l'entrée 34 de l'échangeur 13 du récupérateur RTE. L'habitacle du véhicule hybride (non représenté), mû par le moteur thermique 12 et par le moteur électrique alimenté par la batterie HT 16, est chauffé par un système de chauffage 36, ou dispositif aérotherme, composé principalement d'un ventilateur et d'un échangeur de chaleur air/liquide 38. Le circuit de refroidissement du moteur thermique comporte une canalisation 40 dans laquelle circule le liquide caloporteur. Cette canalisation 40 relie le moteur thermique 12 à l'entrée 34 de l'échangeur 13 du récupérateur RTE. La sortie 22 de l'échangeur 13 du récupérateur RTE est reliée à l'entrée 42 de l'échangeur 38 par l'intermédiaire de la pompe électrique 26 et de la vanne trois voies 28. Une canalisation 44 munie d'un clapet anti-retour 46 relie l'entrée 34 de l'échangeur 13 du récupérateur RTE à l'entrée 42 de l'échangeur 38. Le clapet anti-retour permet de réduire le débit dans la canalisation 44 pour une pression différentielle aux bornes du clapet inférieure à une valeur prédéterminée.

Le liquide caloporteur du circuit de refroidissement du moteur thermique 12 passe dans le récupérateur thermique RTE, dans lequel il se réchauffe en absorbant des calories fournies par les gaz d'échappement. La vanne trois voies 28 peut être pilotée pour prendre l'une de deux positions extrêmes ou une position entre ces deux positions extrêmes. Pour une première position extrême de la vanne trois voies 28, le liquide caloporteur est dirigé exclusivement vers l'échangeur 20, dans lequel il cède des calories ce qui réchauffe la batterie HT. Le liquide caloporteur est ensuite recirculé dans le récupérateur RTE en passant par la canalisation 32. Pour une deuxième position extrême de la vanne trois voies 28, le fluide caloporteur ne circule plus dans l'échangeur 20 de la batterie mais passe intégralement dans le circuit aérotherme 36 de façon à chauffer l'habitacle et à chauffer le moteur thermique (au démarrage lorsque la moteur est froid). Entre ces deux positions extrêmes, une partie du liquide caloporteur circule dans l'échangeur 20 de la batterie et l'autre partie passe dans le circuit aérotherme 38. Le pilotage de la position de la vanne trois voies 28 permet donc d'ajuster les besoins en thermique habitacle avec les besoins en thermique batterie HT et de privilégier, par exemple, la thermique habitacle et le chauffage du moteur thermique lorsque la température extérieure est basse au lieu du chauffage de la batterie HT, ou inversement de privilégier le chauffage de la batterie au détriment du chauffage de l'habitacle.

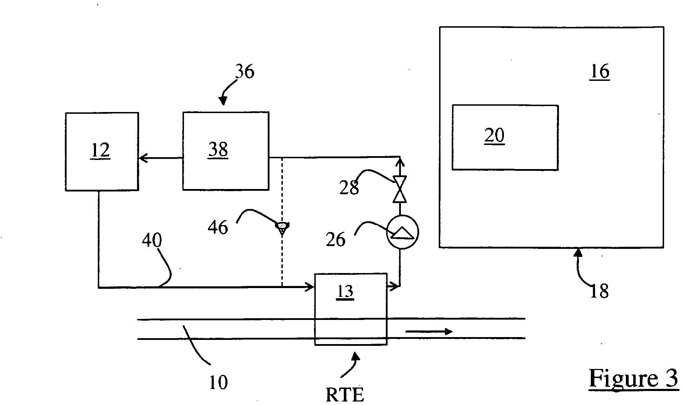

Les figures 2 et 3 illustrent deux modes de fonctionnement du dispositif représenté sur la figure 1. Le mode de fonctionnement illustré sur la figure 2 privilégie le chauffage de la batterie HT16. A cette fin, la vanne trois voies 28 est positionnée sur la première position extrême de sorte que le liquide caloporteur est dirigé entièrement vers la batterie 16. Après s'être réchauffé dans le récupérateur RTE, le liquide caloporteur passe dans la pompe 26, la vanne 28 et l'échangeur de chaleur 20 où il se refroidit en réchauffant l'air présent dans l'enceinte 18 et donc en réchauffant la batterie. Le liquide caloporteur est ensuite recyclé dans le récupérateur RTE par la canalisation 32. L'énergie thermique récupérée des gaz d'échappement profite ainsi entièrement au chauffage de la batterie. On remarque que pour ce mode de fonctionnement, le liquide caloporteur assurant le refroidissement du moteur thermique 12 ne passe plus par le récupérateur RTE , mais passe dans l'échangeur 38 pour chauffer l'habitacle. Sous l'effet de la pression différentielle aux bornes du clapet anti-retour 46, ce dernier s'ouvre ce qui permet un débit dans le circuit aérotherme 36.

Le mode de fonctionnement illustré sur la figure 3 privilégie le chauffage de l'habitacle par le circuit aérotherme 38. La vanne trois voies 28 est positionnée dans la deuxième position extrême de telle sorte que le débit de liquide caloporteur traversant le récupérateur RTE alimente le circuit aérotherme 36, sans passer par l'échangeur 20 de la batterie HT 16. De ce fait, l'énergie thermique récupérée à la ligne d'échappement 10 par le récupérateur RTE profite intégralement au chauffage de l'habitacle et éventuellement au chauffage du moteur thermique 12 lorsque ce dernier est froid (au démarrage).

La pompe électrique 26 permet de plus d'avoir un débit de liquide caloporteur dans le circuit aérotherme 36 lorsque le moteur thermique 12 est arrêté ce qui permet de maintenir le confort thermique de l'habitacle lorsque le véhicule est à l'arrêt.

Dans la figure 3 le clapet anti-retour permet de maximiser le débit de liquide traversant le récupérateur RTE et l'aérotherme 36. Ainsi lorsque le moteur thermique est arrêté, la pompe électrique 26 génère une pression relative aux bornes du clapet entraînant sa fermeture. Lorsque le moteur thermique est opérationnel (ainsi que la pompe), le clapet anti-retour 46 permet de limiter le débit de liquide court-circuitant le récupérateur RTE (via les pressions différentielles entre l'entrée et la sortie du clapet).

La pompe électrique 26 permet de plus d'avoir un débit de liquide caloporteur dans le circuit aérotherme 36 lorsque le moteur thermique 12 est arrêté ce qui permet de maintenir le confort thermique de l'habitacle lorsque le véhicule est à l'arrêt.

L'air circulant dans l'enceinte 52 a été préalablement chauffé par les gaz d'échappement dans l'échangeur 54, ce qui chauffe la batterie 50. L'énergie thermique dissipée à l'échappement via l'échangeur air/air 54 est récupérée pour chauffer la batterie.

## Revendications

1. Dispositif de chauffage d'une batterie (16) d'un moteur électrique d'un véhicule hybride comportant un moteur électrique et un moteur thermique (12) muni d'une ligne d'échappement (10) pour l'évacuation des gaz d'échappement, le dispositif étant **caractérisé en ce qu'**il comporte des moyens (13) branchés sur ladite ligne d'échappement, fournissant de la chaleur à ladite batterie placée dans une enceinte contenant un échangeur de chaleur (20) et **en ce que** lesdits moyens fournissant de la chaleur à ladite batterie comportent un récupérateur de chaleur comprenant un échangeur air/liquide (13) dont la sortie (22) et l'entrée (34) sont reliées, par une canalisation (25) contenant un liquide caloporteur, respectivement à l'entrée (24) et à la sortie (30) dudit échangeur de chaleur (20) de la batterie.

2. Dispositif selon la revendication 1 **caractérisé en ce qu'**il comporte une pompe électrique (26) placée dans ladite canalisation (25) entre la sortie (22) dudit échangeur (13) dudit récupérateur de chaleur et l'entrée (24) dudit échangeur (20) de ladite batterie, ladite pompe mettant en circulation ledit liquide caloporteur dans ladite canalisation.

3. Dispositif selon l'une des revendications 1 et 2 **caractérisé en ce que** lesdits moyens branchés sur la ligne d'échappement (10) fournissent de la chaleur au système de chauffage (36) de l'habitacle du véhicule.

4. Dispositif selon les revendications 2 et 3 **caractérisé en ce que** ledit moteur thermique (12) comporte un circuit de refroidissement contenant ledit liquide caloporteur et **en ce que** ledit système de chauffage (36) de l'habitacle comporte un échangeur air/liquide (38) dont la sortie est reliée audit circuit de refroidissement du moteur thermique et dont l'entrée (42) est reliée à la sortie (34) dudit échangeur air/liquide (13) du récupérateur de chaleur.

5. Dispositif selon la revendication 4 **caractérisé en ce que** ladite entrée (42) dudit échangeur air/liquide (38) du système de chauffage (36) de l'habitacle est reliée à ladite sortie (22) de l'échangeur (13) du récupérateur de chaleur par l'intermédiaire de ladite pompe électrique (26) et d'une vanne trois voies (28), qui peut être positionnée entre deux positions extrêmes, une première position permettant de mettre en communication la sortie (22) dudit échangeur (13) dudit récupérateur uniquement avec l'entrée (24) dudit échangeur de chaleur (20) desdits moyens fournissant de la chaleur à la batterie, et une deuxième position extrême permettant de mettre en communication la sortie (22) dudit échangeur (13) dudit récupérateur uniquement avec l'entrée (42) dudit échangeur air/liquide (38) dudit système de chauffage (36) de l'habitacle.

6. Dispositif selon la revendication 4 **caractérisé en ce que** l'entrée (34) dudit échangeur (13) dudit récupérateur de chaleur et l'entrée (42) dudit échangeur (38) dudit système de chauffage de l'habitacle sont reliées entre elles par une canalisation (44) munie d'un clapet anti-retour (46), ledit clapet permettant de réduire le débit dans ladite canalisation pour une pression différentielle aux bornes du clapet inférieure à une valeur prédéterminée.

7. Dispositif selon l'une des revendications précédentes **caractérisé en ce que** ladite batterie (16) est la batterie d'alimentation en courant électrique dudit moteur électrique.

8. Dispositif selon l'une des revendications 1 à 7 **caractérisé en ce que** ledit échangeur de chaleur (20) de la batterie est un échangeur liquide/air.

## Claims

1. A device for heating a battery (16) of an electric motor of a hybrid vehicle comprising an electric motor and a thermal engine (12) provided with an exhaust line (10) for discharging exhaust gases, the device being **characterized in that** it comprises means (13) connected to the said exhaust line, supplying heat to the said battery placed in a housing containing a heat exchanger (20) and **in that** the said means supplying heat to the said battery comprise a heat recuperator comprising an air/liquid exchanger (13), the outlet (22) and inlet (34) of which are connected, by a duct (25) containing a heat transfer liquid, respectively to the inlet (24) and to the outlet (30) of the said heat exchanger (20) of the battery.

2. The device according to Claim 1, **characterized in that** it comprises an electric pump (26) placed in the said duct (25) between the outlet (22) of the said exchanger (13) of the said heat recuperator and the inlet (24) of the said exchanger (20) of the said battery, the said pump circulating the said heat transfer liquid in the said duct.

3. The device according to one of Claims 1 and 2, **characterized in that** the said means connected to the exhaust line (10) supply heat to the heating system (36) of the passenger compartment of the vehicle.

4. The device according to Claims 2 and 3, **characterized in that** the said thermal engine (12) comprises a cooling circuit containing the said heat transfer liquid and **in that** the said heating system (36) of the passenger compartment comprises an air/liquid exchanger (38), the outlet of which is connected to the said cooling circuit of the thermal engine and the inlet (42) of which is connected to the outlet (34) of the said air/liquid exchanger (13) of the heat recuperator.

5. The device according to Claim 4, **characterized in that** the said inlet (42) of the said air/liquid exchanger (38) of the heating system (36) of the passenger compartment is connected to the said outlet (22) of the exchanger (13) of the heat recuperator by means of the said electric pump (26) and of a three-way valve (28), which can be positioned between two extreme positions, a first position allowing the placing in communication of the outlet (22) of the said exchanger (13) of the said recuperator solely with the inlet (24) of the said heat exchanger (20) of the said means providing heat to the battery, and a second extreme position allowing the placing in communication of the outlet (22) of the said exchanger (13) of the said recuperator solely with the inlet (42) of the said air/liquid exchanger (38) of the said heating system (36) of the passenger compartment.

6. The device according to Claim 4, **characterized in that** the inlet (34) of the said exchanger (13) of the said heat recuperator and the inlet (42) of the said exchanger (38) of the said heating system of the passenger compartment are connected with each other by a duct (44) provided with a non-return valve (46), the said valve allowing the flow in the said duct to be reduced for a differential pressure at the terminals of the valve less than a predetermined value.

7. The device according to one of the preceding claims, **characterized in that** the said battery (16) is the electric-current supply battery of the said electric motor.

8. The device according to one of Claims 1 to 7, **characterized in that** the said heat exchanger (20) of the battery is a liquid/air exchanger.

## Patentansprüche

1. Erwärmungsvorrichtung einer Batterie (16) eines Elektromotors eines Hybridfahrzeugs, das einen Elektromotor und einen Verbrennungsmotor (12), der mit einer Auspuffanlage (10) zum Ableiten der Abgase versehen ist, aufweist, wobei die Vorrichtung **dadurch gekennzeichnet ist, dass** sie Mittel (13) aufweist, die an die Auspuffanlage angeschlossen sind, die der Batterie, die in einem Einschluss platziert ist, der einen Wärmeaustauscher (20) enthält, Wärme liefert, und dass die Mittel, die der Batterie Wärme liefern, einen Wärmerückgewinner aufweisen, der einen Luft-/Flüssigkeitsaustauscher (13) aufweist, dessen Ausgang (22) und dessen Eingang (34) durch eine Kanalisation (25), die einen Wärmeträger enthält, jeweils mit dem Eingang (24) und dem Ausgang (30) des Wärmeaustauschers (20) der Batterie verbunden sind.

2. Vorrichtung nach Anspruch 1, **dadurch gekennzeichnet, dass** sie eine elektrische Pumpe (26) aufweist, die in der Kanalisation (25) zwischen dem Ausgang (22) des Austausches (13) des Wärmerückgewinners und dem Eingang (24) des Austauschers (20) der Batterie platziert ist, wobei die Pumpe den Wärmeträger in der Kanalisation umwälzt.

3. Vorrichtung nach einem der Ansprüche 1 und 2, **dadurch gekennzeichnet, dass** die Mittel, die an die Auspuffanlage (10) angeschlossen sind, dem Erwärmungssystem (36) der Fahrgastzelle des Fahrzeugs Wärme liefern.

4. Vorrichtung nach den Ansprüchen 2 und 3, **dadurch gekennzeichnet, dass** der Verbrennungsmotor (12) einen Kühlkreislauf aufweist, der den Wärmeträger enthält, und dass das Erwärmungssystem (36) der Fahrgastzelle einen Luft-/Flüssigkeitsaustauscher (38) aufweist, dessen Ausgang mit dem Kühlkreislauf des Verbrennungsmotors verbunden ist und dessen Eingang (42) mit dem Ausgang (34) des Luft/Flüssigkeitsaustauschers (13) des Wärmerückgewinners verbunden ist.

5. Vorrichtung nach Anspruch 4, **dadurch gekennzeichnet, dass** der Eingang (42) des Luft/Flüssigkeitsaustauschers (38) des Erwärmungssystems (36) der Fahrgastzelle mit dem Ausgang (22) des Austauschers (13) des Wärmerückgewinners über die elektrische Pumpe (26) und ein Dreiwegeventil (28), das zwischen zwei Endpositionen positioniert werden kann, angeschlossen ist, wobei eine erste Position es erlaubt, den Ausgang (22) des Austauschers (13) des Rückgewinners nur mit dem Eingang (24) des Wärmeaustauschers (20) der Mittel in Kommunikation zu setzen, die der Batterie Wärme liefern, und wobei eine zweite Endposition es erlaubt, den Ausgang (22) des Austauschers (13) des Rückgewinners nur mit dem Eingang (42) des Luft-Flüssigkeitsaustauschers (38) des Erwärmungssystems (36) der Fahrgastzelle zu verbinden.

6. Vorrichtung nach Anspruch 4, **dadurch gekennzeichnet, dass** der Eingang (34) des Austauschers (13) des Wärmerückgewinners und der Eingang (42) des Austauschers (38) des Erwärmungssystems der Fahrgastzelle miteinander durch eine Kanalisation (44) verbunden sind, die mit einem Rückschlagventil (46) versehen ist, wobei es das Ventil erlaubt, den Durchfluss in der Kanalisation für einen Differenzdruck an den Grenzen des Ventils kleiner als ein vorbestimmter Wert zu verringern.

7. Vorrichtung nach einem der vorhergehenden Ansprüche, **dadurch gekennzeichnet, dass** die Batterie (16) eine Stromversorgungsbatterie des Elektromotors ist.

8. Vorrichtung nach einem der Ansprüche 1 bis 7, **dadurch gekennzeichnet, dass** der Wärmeaustauscher (20) der Batterie ein Flüssigkeits-/Luftaustauscher ist.
